# EUROPEAN PATENT APPLICATION

(11) **EP 4 350 318 A1**
(43) Date of publication of application: **10.04.2024**
(21) Application number: 22811312.2
(22) Date of filing: 24.05.2022
(51) Int. Cl.: G01M 17/007

(54) **TEST OBJECT TESTING SYSTEM, TRAVEL RESISTANCE CALCULATION DEVICE, TRAVEL RESISTANCE CALCULATION PROGRAM, AND TEST OBJECT TESTING METHOD**

(30) Priority: 25.05.2021 JP 2021087408
(71) Applicant: HORIBA, Ltd., Kyoto-shi, Kyoto 601-8510 (JP)
(72) Inventor: KAWAZOE, Hiroshi, Kyoto-shi, Kyoto 601-8510 (JP)
(74) Representative: Müller Hoffmann & Partner
(86) International application number: PCT/JP2022/021209
(87) International publication number: WO 2022/250042

(57) **Abstract**

The present invention is a test object testing device 100 that reproduces real driving in a real world with high accuracy using a bench test device and tests a test object W that is a vehicle or a part of the vehicle, the test object testing device including a dynamometer 2 that applies a load to the test object W, a travel route setting unit 3 that sets a travel route R using a map M1, a road information acquisition unit 4 that acquires road information of the travel route R from a map M2, a travel resistance calculation unit 6 that calculates a travel resistance of the test object W on the basis of the road information, and a dynamometer control unit 7 that controls the dynamometer 2 on the basis of the travel resistance.

## Description

### Technical Field

The present invention relates to a test object testing system for testing a test object that is a vehicle or a part thereof, a travel resistance calculation device and a travel resistance calculation program for use in the test object testing system, and a test object testing method for testing a test object that is a vehicle or a part thereof.

### Background Art

As a method for testing a test object as a vehicle or a part thereof, there is conventionally a method using a test facility (hereinafter, bench test device) using a dynamometer. A travel load (e.g., vehicle inertial force, rolling resistance, aerodynamic resistance, load change due to inclination, and the like) is input as a load torque of the dynamometer using the bench test device, whereby real driving in a real world can be reproduced by the bench test device. In addition, as a method of reproducing real driving in a real world by a bench test device, as shown in Patent Literature 1, there is a method of reproducing real driving by reproducing a vehicle speed and an accelerator opening degree at the time of real driving by a bench test device.

### Citation List

### Patent Literature

Patent Literature 1: JP 2021-508799 A

### Summary of Invention

### Technical Problem

However, as in Patent Literature 1, in order to reproduce real driving in a real world by a bench test device, it is necessary to actually travel on a road at least once.

The present invention has been made in view of the above-described problem, and a main object of the present invention is to reproduce real driving by a bench test device without real driving in a real world.

### Solution to Problem

Specifically, a test object testing system according to the present invention is a test object testing system for testing a test object that is a vehicle or a part of the vehicle, the test object testing system including: a dynamometer that applies a load to the vehicle or a part of the vehicle; a travel route setting unit that sets a travel route using a map; a road information acquisition unit that acquires road information of the travel route from the map; a travel resistance calculation unit that calculates a travel resistance of the test object based on the road information; and a dynamometer control unit that controls the dynamometer based on the travel resistance.

In such a test object testing system, a travel route is set using a map, road information of the travel route is acquired, and a travel resistance of a test object is calculated on the basis of the road information. Therefore, by controlling a dynamometer on the basis of the calculated travel resistance of the test object, real driving in a real world can be reproduced by a test facility (bench test device) using the dynamometer. As a result, control performance of the vehicle or a part thereof can be tested or evaluated without travel in the real world.

Here, although it is conceivable, for example, to set a travel route using map data such as Google maps, depending on the map data, accuracy thereof or information is largely limited and use of the map data may be limited in some cases. Therefore, it is preferable that the map includes a first map and a second map more detailed than the first map, that the travel route setting unit sets a travel route using the first map, and that the road information acquisition unit acquires road information of the travel route from the second map.

With this configuration, with respect to the travel route set using the first map, road information of the travel route is acquired using the second map that is more detailed than the first map, and a travel resistance of a test object is calculated on the basis of the road information. Therefore, by controlling the dynamometer on the basis of the calculated travel resistance of the test object, real driving in the real world can be reproduced with high accuracy by a test facility (bench test device) using the dynamometer.

Examples of the first map includes Google maps, or a map in which a shape of a road or the like is deformed or exaggerated for easy viewing by a person. In addition, an example of the second map is a highly accurate three-dimensional map such as an HD map.

Here, the highly accurate three-dimensional map includes static information that is three-dimensional map information, for example, road surface information, lane information, position information of a building, and the like. Specifically, the highly accurate three-dimensional map is a spatial map in which three-dimensional position information (longitude, latitude, height) of a road and a stationary object on the road is recorded, and the stationary object includes at least one of, for example, a crosswalk, a road shoulder, a stop line, various signs, a branch point, a junction, a traveling road mark, a traffic light, a guardrail, a utility pole, a tollgate, a building, a signboard, a center line of a roadway or a lane, a section line, a shoulder line, and the like.

In addition to the above described (1) static information that is three-dimensional map information such as the road surface information, the lane information, or the position information of a building, the highly accurate three-dimensional map may include at least one of (2) quasi-static information such as a schedule of traffic regulations, a road construction schedule, or wide area weather forecast information, for example, (3) quasi-dynamic information such as accident information, traffic congestion information, traffic regulation information, or narrow area weather information, for example, and (4) dynamic information that is real-time information such as surrounding vehicle information, pedestrian information, or signal information.

As a specific mode, it is desirable that the travel route setting unit acquires position information of the travel route, and the road information acquisition unit acquires road information corresponding to the position information from the map. Here, the position information of the travel route includes longitude information and latitude information at each position of the travel route. In addition, the road information corresponding to the position information includes the above-described static information, and may further include at least one of the above-described quasi-static information, quasi-dynamic information, and dynamic information.

As a specific mode for highly accurately reproducing real driving in the real world by the bench test device, it is desirable that the road information acquisition unit acquires from the map, as the road information, at least one of a slope, a cant, a road curvature, a sign position, a traffic light position, and an intersection position of the travel route.

In addition, as a specific mode for highly accurately reproducing real driving in the real world by the bench test device, it is desirable that the travel resistance calculation unit calculates the travel resistance based on the acquired road information, vehicle specifications, and a vehicle speed.

It is desirable that the test object is a vehicle (ADAS vehicle) having an advanced driver-assistance system (ADAS), an automatic driving vehicle (AD vehicle), or a part of the vehicles.

In order to configure a bench test device suitable for an ADAS vehicle or an AD vehicle, the test object testing system desirably further includes a vehicle position simulation unit that simulates travel of the test object on the travel route and calculates a simulation signal including a vehicle position and road information on the travel route.

In order to test the ADAS vehicle or the AD vehicle by the bench test device, it is conceivable to input sensor simulation signals that simulate real road travel to various sensors mounted on these vehicles. Therefore, the vehicle position simulation unit desirably generates sensor simulation signals of various sensors based on the vehicle position and the road information, and inputs the sensor simulation signals to the various sensors.

In order to reproduce a real driving test conforming to a regulation such as a real driving emission (RDE) test on a board, the travel route is desirably a travel route satisfying a real driving test conforming to regulations.

A travel resistance calculation device according to the present invention is a travel resistance calculation device that sets a travel resistance to a dynamometer that applies a load to a vehicle or a part of the vehicle, the travel resistance calculation device including: a travel route setting unit that sets a travel route using a map; a road information acquisition unit that acquires road information of the travel route from the map; and a travel resistance calculation unit that calculates a travel resistance of the test object based on the road information.

Furthermore, a test object testing method according to the present invention is a test object testing method for testing a test object that is a vehicle or a part of the vehicle, the test object testing method including: a travel route setting step of setting a travel route using a map; a road information acquisition step of acquiring road information of the travel route from the map; and a travel resistance calculation step of calculating a travel resistance of the test object based on the road information, in which a dynamometer is controlled based on the travel resistance.

In the test object testing method, by setting the travel route as a travel route satisfying a real driving test conforming to regulations, a real driving test conforming to the regulations can be reproduced using the dynamometer without real driving.

Furthermore, a travel resistance calculation program according to the present invention is a travel resistance calculation program for calculating a travel resistance to be input to a dynamometer that applies a load to a vehicle or a part of the vehicle, the travel resistance calculation program causing a computer to exhibit functions as: a travel route setting unit that sets a travel route using a map; a road information acquisition unit that acquires road information of the travel route from the map; and a travel resistance calculation unit that calculates a travel resistance of the test object based on the road information.

In addition, a test object testing system according to the present invention is a test object testing system that brings a test object that is a vehicle or a part of the vehicle into a traveling state and tests the test object, the test object testing system including: an on-board traveling device that brings the test object into a traveling state; a travel route setting unit that sets a travel route using a first map; a road information acquisition unit that acquires road information of the travel route from a second map more detailed than the first map; and a road information input unit that inputs the road information to a vehicle control device of the test object. Here, examples of the on-board traveling device include a free roller device or a free hub device that does not include a dynamometer that simulates a traveling state of a vehicle.

Since in the test object testing system, with respect to the travel route set using the first map, the road information of the travel route is acquired using the second map that is more detailed than the first map, and is input to the vehicle control device on the basis of the road information, real driving in the real world can be reproduced with higher accuracy on the on-board traveling device. As a result, the vehicle control device can be tested or evaluated without real driving in the real world.

### Advantageous Effects of Invention

According to the present invention described above, real driving in a real world can be reproduced with high accuracy by a bench test device.

### Brief Description of Drawings

FIG. 1 is an overall schematic view of a test object testing system according to an embodiment of the present invention.
FIG. 2 is an overall schematic view of a test object testing system according to a modified embodiment.
FIG. 3 is an overall schematic view of a test object testing system according to a modified embodiment.
FIG. 4 is an overall schematic view of a test object testing system according to a modified embodiment.
FIG. 5 is an overall schematic view of a test object testing system according to a modified embodiment.

### Description of Embodiments

In the following, a test object testing system according to an embodiment of the present invention will be described with reference to the drawings.

A test object testing system 100 of the present embodiment is a system for performing a bench test of a test object W using a chassis dynamometer 2, the test object being, for example, a vehicle having an advanced driver-assistance system (ADAS) or a part of the vehicle. The test object W may be an ordinary vehicle that does not have an ADAS or a part of the vehicle, or an automatic driving vehicle or a part of the vehicle.

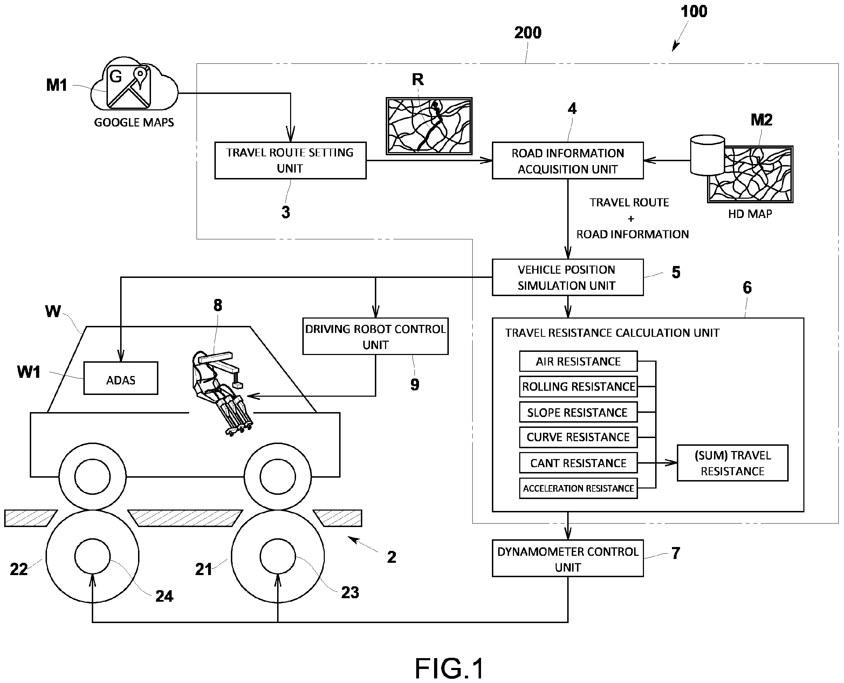

Specifically, as illustrated in FIG. 1, the test object testing system 100 includes the chassis dynamometer 2 that applies a load to the test object W, a travel route setting unit 3 that sets a travel route R using a first map M1, a road information acquisition unit 4 that acquires road information of the travel route R from a second map M2 that is more detailed than the first map M1, a vehicle position simulation unit 5 that simulates travel of a vehicle on the travel route R to calculate a vehicle position, a travel resistance calculation unit 6 that calculates a travel resistance of the test object W on the basis of road information at the calculated vehicle position, and a dynamometer control unit 7 that controls the chassis dynamometer 2 on the basis of the travel resistance. The travel route setting unit 3, the road information acquisition unit 4, the vehicle position simulation unit 5, the travel resistance calculation unit 6, and the dynamometer control unit 7 are configured using a computer including a CPU, a memory, an input/output interface, an input means, an external communication means, and the like. In the present embodiment, the travel route setting unit 3, the road information acquisition unit 4, the vehicle position simulation unit 5, and the travel resistance calculation unit 6 constitute a travel resistance calculation device 200.

In the following, each unit will be described in detail.

The chassis dynamometer 2 includes a front wheel roller 21 on which a front wheel W1 of the test object W is placed, a rear wheel roller 22 on which a rear wheel W2 of the test object W is placed, and dynamometers 23 and 24 that input loads to the front wheel roller 21 and the rear wheel roller 22, respectively. The dynamometers 23 and 24 are feedback-controlled on the basis of a predetermined load command value (torque command value) input by the dynamometer control unit 7. Here, the dynamometer control unit 7 sequentially calculates a load command value from a travel resistance calculated by the travel resistance calculation unit 6 to be described later, and controls the chassis dynamometer 2 on the basis of the load command value. When the test object W is a front-wheel drive vehicle, the rear wheel roller 22 and the dynamometer 24 may not be provided.

Here, in the test object W placed on the chassis dynamometer 2, a driving robot 8 is mounted on a seat W3 of a driver's seat. The driving robot 8 has various actuators for operating a steering wheel, an accelerator, a brake, and the like as necessary. The driving robot 8 is controlled by a driving robot control unit 9. Note that for the test object W, steering control, automatic cruise control, and automatic brake control are basically performed by an ADAS controller W1 built in the test object W. Note that a person may drive without using the driving robot 8, or unmanned automatic driving may be performed.

The travel route setting unit 3 sets the travel route R using the first map M1 (e.g., a map for use for route guidance, such as Google maps or Yahoo map). The first map is assumed to include at least route information and position information (latitude information and longitude information). The travel route setting unit 3 accesses the first map M1 via the Internet or the like. Then, the travel route setting unit 3 sets the travel route R by inputting the travel route R on the first map M1 using an input means (e.g., a keyboard, a mouse, or the like) by an operator. Here, the travel route setting unit 3 acquires the position information (specifically, the latitude information and the longitude information) of the travel route R.

The travel route R is arbitrarily set from the first map M1, and travel route corresponding to various uses can be set for development of the test object W. This enables the development of the test object W to be promoted without real driving. In addition, by creating a travel route satisfying a real driving test as the travel route R, it is possible to reproduce a real driving test conforming to the regulations without real driving. The real driving test may include, for example, a real driving emission (RDE) test introduced in various countries such as Europe.

The road information acquisition unit 4 acquires the road information of the travel route R from the second map M2 having more detailed information than the first map M1. Note that the first map M1 and the second map M2 may be stored in a memory inside the test object testing system 100, or may be stored in, for example, a server device different from the test object testing system 100 and accessible via, for example, the Internet.

The second map M2 includes at least the road information in addition to the route information and the position information (the latitude information and the longitude information). Here, the road information includes a road geometry such as a slope, a cant, or a road curvature, and may also include a road surface friction coefficient.

Specifically, the second map M2 is a highly accurate three-dimensional map (HD map), and includes, for example, static information that is three-dimensional map information such as road surface information, lane information, or position information of a building. In detail, the highly accurate three-dimensional map is a spatial map in which three-dimensional position information (longitude, latitude, height) of a road and a stationary object on the road is recorded. The stationary object includes, for example, at least one of a crosswalk, a road shoulder, a stop line, various signs, a branch point, a junction, a traveling road mark, a traffic light, a guardrail, a utility pole, a tollgate, a building, a signboard, a center line of a roadway or a lane, a section line, a shoulder line, and the like.

Specifically, the road information acquisition unit 4 acquires at least one piece of road information included in any one of the following (1) to (3) from map information of the second map M2.
(1) A road geometry such as a slope, a cant, or a road curvature,
(2) a road shape such as a branch point, a junction, or an intersection, and
(3) road ancillary information such as a tollgate, a road sign (position and display content), a position of a traffic light, a crosswalk, a guardrail, or a road shoulder,

Acquisition of each of the above information by the road information acquisition unit 4 includes calculation of each of the above information using the map information of the second map M2.

The vehicle position simulation unit 5 simulates traveling of the test object W on the travel route R on the basis of a predetermined travel pattern, and calculates a simulation signal including the vehicle position and the road information on the travel route R, and the like. Here, the vehicle position simulation unit 5 is configured with, for example, a GPS/GNSS simulator, a sensor emulator, or the like. The simulation signal including the vehicle position, the road information, and the like calculated by the vehicle position simulation unit 5 is input to an ADAS controller W1, and an ADAS system of the test object W is controlled by the ADAS controller W1. In addition, the vehicle position simulation unit 5 generates sensor simulation signals of various sensors (radar, lidar, camera, and the like) mounted on the test object on the basis of the vehicle position and the road information (in particular, a stationary object) in order to simulate real road travel. Then, the sensor simulation signal generated by the vehicle position simulation unit 5 is input to various sensors (radar, lidar, camera, and the like). Furthermore, the sensor simulation signal may be input to the ADAS controller W1. In a case where the test object W is an ordinary vehicle having no ADAS, the simulation signal is input to a PWT controller that controls a vehicle drive system such as a power train, and the vehicle drive system of the test object W is controlled by the PWT controller. In a case where the test object W is an automatic driving vehicle, the simulation signal is input to an AD controller that performs automatic driving control of the vehicle, the test object W is controlled by the AD controller, and the sensor simulation signal is input to various sensors (radar, lidar, camera, and the like). In addition to the above, the present invention also includes application to various vehicle control devices such as a steering control system and a brake control system.

The simulation signal of the vehicle position or the like is input to the driving robot control unit 9 on the basis of a preset driver model (driving mode such as rough driving, smooth driving, or large acceleration/deceleration driving), and the driving robot control unit 9 controls the driving robot 8 to drive the test object W. The driver model is stored in a computer resource inside the test object testing system such as in the travel route setting unit 3, in the driving robot control unit 9, or in an external control device (not illustrated), and the simulation signal of a vehicle position corrected using the driver model is input to the driving robot control unit 9. In a case where the test object W is an automatic driving vehicle or a part thereof, the driving robot 8 may not be used.

The travel resistance calculation unit 6 calculates the travel resistance of the test object W on the basis of the acquired road information, preset vehicle specifications and vehicle speed based on the calculated road information at the vehicle position.

Specifically, the travel resistance calculation unit 6 acquires at least one of a slope (Slope), a curvature radius (Curvature), or a cant (Cant) from the road information acquisition unit 4, and calculates the travel resistance. In addition, various coefficients such as a rolling resistance coefficient necessary for calculating the travel resistance are input in advance to the travel resistance calculation unit 6. Note that the travel resistance calculation unit 6 may correct various coefficients such as the rolling resistance coefficient input in advance from the road surface information (weather information as necessary) included in the road information.

The travel resistance calculation unit 6 of the present embodiment calculates the travel resistance that is a sum of an air resistance received by the vehicle, a rolling resistance of a tire, a slope resistance received due to a slope, a curve resistance received when the vehicle turns a curve, a cant resistance received due to the cant, and a vehicle inertia force generated at the time of acceleration or deceleration. The travel resistance may be calculated using any one of the above, and a combination thereof can be appropriately changed. In addition, the air resistance, the rolling resistance, the slope resistance, or the curve resistance may be sequentially calculated using dynamic road information obtained from the second map M2.

The travel resistance obtained by the travel resistance calculation unit 6 is transmitted to the dynamometer control unit 7, and the dynamometer control unit 7 calculates the load command value (torque command value) on the basis of the travel resistance and controls the chassis dynamometer 2 on the basis of the load command value. As a result, the travel resistance corresponding to the vehicle position on the travel route simulated by the vehicle position simulation unit 5 is applied to the test object W.

Next, a test object testing method using the test object testing device 100 of the present embodiment will be described.

### 1. Travel route setting step

First, an operator sets the travel route R using the first map M1, a vehicle/traffic simulator, and the like. Here, the travel route setting unit 3 acquires information including the latitude information and the longitude information of the set travel route R from the first map M1.

### 2. Road information acquisition step

Next, the road information acquisition unit 4 acquires road information corresponding to the set travel route R from the second map M2. The acquired road information is stored in the memory (not illustrated) inside the test object testing system 100 and transmitted to the vehicle position calculation unit 5.

### 3. Travel resistance calculation step

Then, the travel resistance calculation unit 6 calculates the travel resistance on the basis of the set travel route R, the road information thereof, and the calculated vehicle position. The calculated travel resistance is transmitted to the dynamometer control unit 7. The dynamometer control unit 7 controls the chassis dynamometer 2 on the basis of the load command value calculated by the input travel resistance. As a result, the travel resistance corresponding to the vehicle position on the travel route R simulated by the vehicle position simulation unit 5 is applied to the test object W.

### <Effect of the present embodiment>

According to thus configured test object testing device 100 of the present embodiment, with respect to the travel route R set using the first map M1, the road information of the travel route R is acquired using the second map M2 that is more detailed than the first map M1, and the travel resistance of the test object W is calculated on the basis of the road information. Therefore, by setting the calculated travel resistance of the test object W to the chassis dynamometer 2, real driving in the real world can be reproduced with high accuracy by a test facility (bench test device) using the dynamometer. As a result, it is possible to test or evaluate control performance of the vehicle or a part thereof without real driving in the real world.

### <Other embodiments>

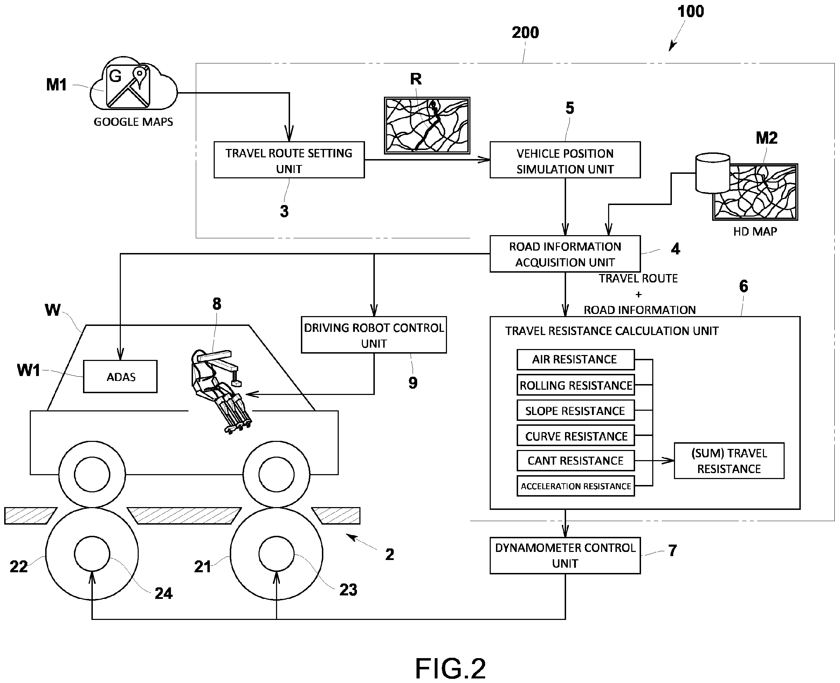

For example, although in the above embodiment, the road information is allocated to all the routes at the time of creating the travel route, after a vehicle position on the travel route R is calculated by the vehicle position simulation unit 5, the road information acquisition unit 5 may acquire the road information at the vehicle position from the second map M2 as illustrated in FIG. 2.

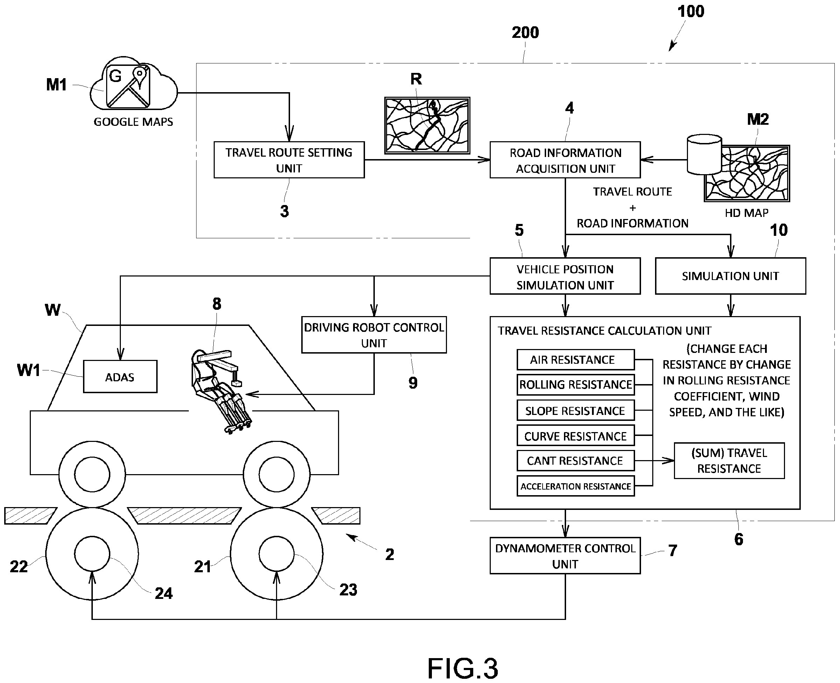

In addition to the configuration of the above embodiment, a simulation unit 10 that simulates a change in a wind speed due to weather or in a road surface condition due to weather may be further provided, and a rolling resistance after the change may be calculated using a change in a rolling resistance coefficient calculated by the simulation unit 10, or an air resistance after the change may be calculated using the wind speed as illustrated in FIG. 3.

Furthermore, while the travel resistance calculation unit of the above embodiment calculates the travel resistance by obtaining three of the slope resistance, the cant resistance, and the curve resistance, the travel resistance calculation unit may be configured to calculate the travel resistance by obtaining at least one of the slope resistance, the cant resistance, and the curve resistance. In addition, the travel resistance calculation unit may be configured to be able to select which of the three, the slope resistance, the cant resistance, and the curve resistance, is to be used.

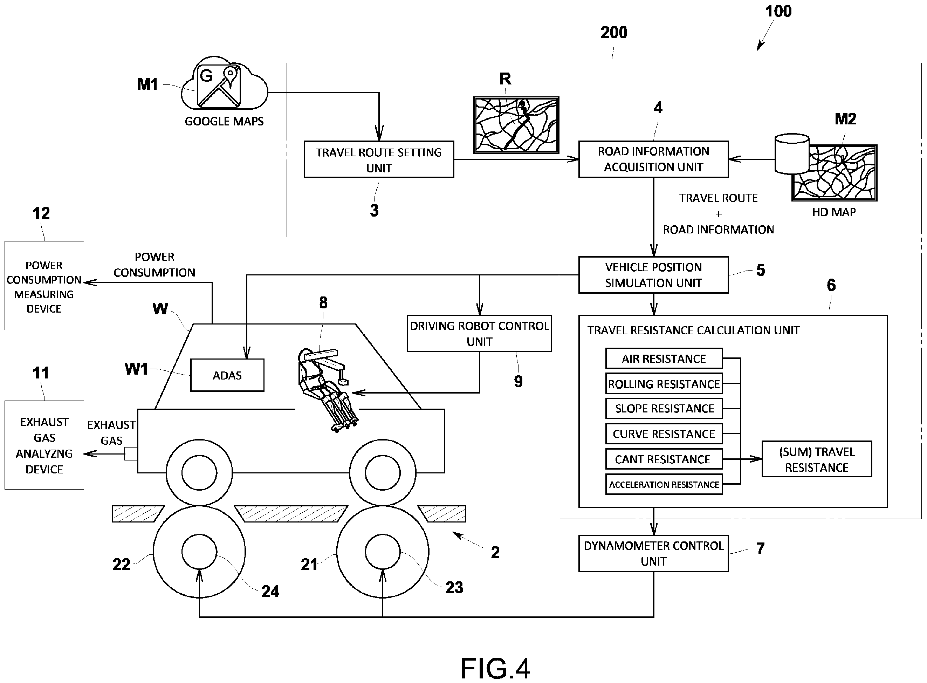

Moreover, as illustrated in FIG. 4, an exhaust gas test of the test object W may be performed by further providing an exhaust gas testing device 11 in the test object testing system 100 of the above embodiment. In addition, as illustrated in FIG. 4, a power consumption measuring device 12 may be further provided in the test object testing system 100 of the above embodiment to perform power cost test of the test object W. Although both the exhaust gas testing device 11 and the power consumption measuring device 12 are illustrated in FIG. 4 at once for convenience of description, either of them may be provided.

While the test object testing system of the above embodiment uses a chassis dynamometer, the test object testing system may use an engine dynamometer, a brake dynamometer, or a drive system testing device (a device that performs a test of a drive system with a dynamometer connected to a rotation shaft of the drive system) for testing a drive system such as a power train.

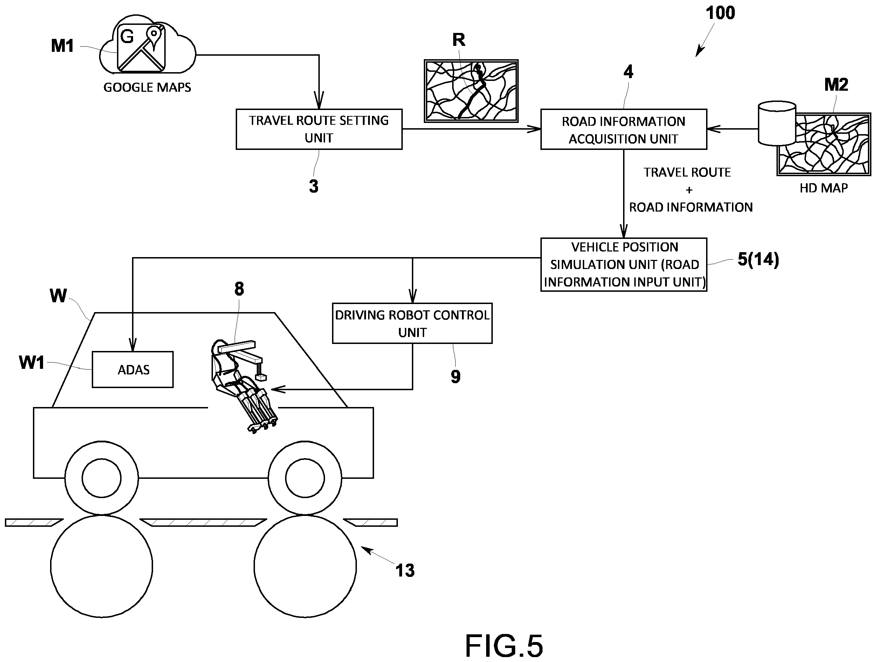

In addition, as illustrated in FIG. 5, the test object testing system may be configured to bring the test object W that is a vehicle or a part thereof into the traveling state and test the test object W. Specifically, the test object testing system 100 includes an on-board traveling device 13 that brings the test object W into the traveling state, the travel route setting unit 3 that sets the travel route R using the first map M1, the road information acquisition unit 4 that acquires the road information of the travel route R from the second map more detailed than the first map M1, and a road information input unit 14 that inputs the road information to the vehicle control device (ADSA controller, PWT controller, AD controller, or the like) of the test object.

Here, an example of the on-board traveling device 13 is a free roller device or a free hub device that does not include a dynamometer that simulates a traveling state of the test object W. The road information input unit 14 has the same function as that of the vehicle position simulation unit 5 of the above embodiment. Since in the test object testing system 100, with respect to the travel route R set using the first map M1, the road information of the travel route R is acquired using the second map M2 that is more detailed than the first map M1, and is input to the vehicle control device (ADSA controller, PWT controller, AD controller, or the like) on the basis of the road information, real driving in the real world can be reproduced with higher accuracy on the on-board traveling device 13. As a result, the vehicle control device can be tested or evaluated without real driving in the real world.

While in the above embodiment, the first map and the second map are used as the maps, a travel route may be set using only the second map to acquire road information of the travel route. In this case, the second map can be simply referred to as a map. In addition, a combination of the first map and the second map may be simply referred to as a map.

Although in the test object testing system of the above embodiment, the ADAS vehicle, the AD vehicle, or a part thereof is used as the test object, a vehicle other than the ADAS vehicle and the AD vehicle may be used as the test object. In this case, the test object testing system may be configured not to include the vehicle position simulation unit 5 of the above embodiment.

In addition, various modifications and combinations of the embodiments may be made without departing from the gist of the present invention.

### Industrial Applicability

According to the present invention, real driving in a real world can be reproduced with high accuracy by a bench test device.

### Reference Signs List

- 100: test object testing system
- 200: travel resistance calculation device
- W: test object
- 2: chassis dynamometer
- 3: travel route setting unit
- 4: road information acquisition unit
- 5: vehicle position simulation unit
- 6: travel resistance calculation unit
- 7: dynamometer control unit

## Claims

1. A test object testing system for testing a test object that is a vehicle or a part of the vehicle, the test object testing system comprising:
a dynamometer that applies a load to the test object;
a travel route setting unit that sets a travel route using a map;
a road information acquisition unit that acquires road information of the travel route from the map;
a travel resistance calculation unit that calculates a travel resistance of the test object based on the road information; and
a dynamometer control unit that controls the dynamometer based on the travel resistance.

2. The test object testing system according to claim 1, wherein
the map includes a first map and a second map more detailed than the first map,
the travel route setting unit sets a travel route using the first map, and
the road information acquisition unit acquires road information of the travel route from the second map.

3. The test object testing system according to claim 1 or 2, wherein
the travel route setting unit acquires position information of the travel route, and
the road information acquisition unit acquires road information corresponding to the position information from the map.

4. The test object testing system according to any one of claims 1 to 3, wherein the road information acquisition unit acquires from the map, as the road information, at least one of a slope, a cant, a road curvature, a sign position, a traffic light position, and an intersection position of the travel route.

5. The test object testing system according to any one of claims 1 to 4, wherein the travel resistance calculation unit calculates the travel resistance based on the acquired road information, vehicle specifications, and a vehicle speed.

6. The test object testing system according to any one of claims 1 to 5, wherein the test object is a vehicle having an advanced driver assistance system (ADAS), an automatic driving vehicle, or a part of the vehicles.

7. The test object testing system according to any one of claims 1 to 6, further comprising a vehicle position simulation unit that simulates travel of the test object on the travel route and calculates a simulation signal including a vehicle position and road information on the travel route.

8. The test object testing system according to claim 7, wherein the vehicle position simulation unit generates sensor simulation signals of various sensors based on the vehicle position and the road information, and inputs the sensor simulation signals to the various sensors.

9. The test object testing system according to any one of claims 1 to 8, wherein the travel route is a travel route satisfying a real driving test conforming to regulations.

10. A travel resistance calculation device that calculates a travel resistance to be input to a dynamometer that applies a load to a vehicle or a part of the vehicle, the travel resistance calculation device comprising:
a travel route setting unit that sets a travel route using a map;
a road information acquisition unit that acquires road information of the travel route from the map; and
a travel resistance calculation unit that calculates a travel resistance of the test object based on the road information.

11. A test object testing method for testing a test object that is a vehicle or a part of the vehicle, the test object testing method comprising:
a travel route setting step of setting a travel route using a map;
a road information acquisition step of acquiring road information of the travel route from the map; and
a travel resistance calculation step of calculating a travel resistance of the test object based on the road information, wherein a dynamometer is controlled based on the travel resistance.

12. The test object testing method according to claim 9, wherein
the travel route is a travel route satisfying a real driving test conforming to regulations, and
the real driving test conforming to the regulations is reproduced using the dynamometer without real driving.

13. A travel resistance calculation program for calculating a travel resistance to be input to a dynamometer that applies a load to a vehicle or a part of the vehicle, the travel resistance calculation program causing a computer to exhibit functions as:
a travel route setting unit that sets a travel route using a map;
a road information acquisition unit that acquires road information of the travel route from the map; and
a travel resistance calculation unit that calculates a travel resistance of the test object based on the road information.

14. A test object testing system that brings a test object that is a vehicle or a part of the vehicle into a traveling state and tests the test object, the test object testing system comprising:
an on-board traveling device that brings the test object into a traveling state;
a travel route setting unit that sets a travel route using a map;
a road information acquisition unit that acquires road information of the travel route from the map; and
a road information input unit that inputs the road information to a vehicle control device of the test object.
